# EUROPEAN PATENT APPLICATION

(11) **EP 2 953 312 A1**
(43) Date of publication of application: **09.12.2015**
(21) Application number: 14305827.9
(22) Date of filing: 02.06.2014
(51) Int. Cl.: H04L 29/06, G06F 21/41, H04W 12/08

(54) **System to handle passwords for service authentication**

(71) Applicant: Alcatel Lucent, 92100 Boulogne-Billancourt (FR)
(72) Inventor: Helbert, Emmanuel, 67400 ILLKIRCH (FR); Nogueira, Georges, 67400 ILLKIRCH (FR)
(74) Representative: Mouney, Jérôme

(57) **Abstract**

For handling passwords for authentication of a user for a service provided by a control entity (CE) via a communication device (CD), the communication device (CD) retrieves a first secret provided by the user, retrieves a service identifier (Sld) associated with the service provided by the control entity (CE), retrieves a second secret provided by the user, performs a hash algorithm taking as inputs the second secret and the service identifier (Sld), yielding a hashed string, and assembles the first secret with the hashed string to obtain a final password.

## Description

### FIELD OF THE INVENTION

The present invention pertains to a system to handle passwords for service authentication.

### BACKGROUND

In computer science, a password is a piece of information, usually a secret word, phrase, or string of characters that is used as an authentication key to gain access to a service or a resource, such as a file, application or data processing system. A character-based password may be composed of letters, numbers, special characters, or any character set in a given character encoding system. Passwords are commonly used by persons logging onto various types of online services on the web.

For the sake of security, a user must keep his or her password secret. To prevent a password from being stolen, it should be either memorized by user and/or securely stored. Passwords may be forgotten so users tend to use passwords that are easy to remember. However, such passwords may also be easy to guess. As a result, many services requiring passwords will require a minimum complexity level such as minimum length, special characters, etc. to help prevent unauthorized users from guessing passwords.

When a user owns different accounts for different services, it is recommended that all accounts should be set with different passwords to avoid a general security issue when one password is compromised. This is clearly a challenge for a user to remember all his passwords. Users tend to use the same password for all or many services which increases the security risk.

Besides, password leakage issues may also involve the accessed service itself. Therefore, one should consider low-level confidence towards third-party services, including the accessed service itself and integrate secure best practices in its password management.

There is a need for a simple and consistent solution to help the user having different, robust and protected passwords for all the services without the underlying complexity of remembering all these strong passwords and association with corresponding services.

### SUMMARY

This summary is provided to introduce concepts related to the present inventive subject matter. This summary is not intended to identify essential features of the claimed subject matter nor is it intended for use in determining or limiting the scope of the claimed subject matter.

In accordance with one embodiment, a method is provided for handling passwords for authentication of a user for a service provided by a control entity via a communication device, comprising the following steps in the communication device:
retrieving a first secret provided by the user,
retrieving a service identifier associated with the service provided by the control entity,
retrieving a second secret provided by the user,
performing a hash algorithm taking as inputs the second secret and the service identifier, yielding a hashed string,
assembling the first secret with the hashed string to obtain a final password.

Advantageously, the invention provides a solution to generate, and manage securely robust passwords for different services from the end-user perspective without the need to remember all of them. The invention permits to build on-the-fly strong different and unique passwords associated with one access type, this access being a web site, a server or a hardware equipment. This "on-the-fly" password generation mechanism removes unreliable storage and maintains security in accessing the information while satisfying best practices on password robustness.

The password robustness relies on four key elements:
- a master secret,
- a cryptographic hash algorithm that is resistant to collisions,
- a service identifier,
- and a service user pin code.

In an embodiment, the communication device opens a graphical interface to request the user to enter the first secret and the second secret.

In an embodiment, the first secret is an alpha-numeric password.

In an embodiment, the first secret is a biometric key.

In an embodiment, the second secret is a PIN code.

In an embodiment, the first secret is concatenated with the hashed string to obtain the final password.

In an embodiment, the service identifier is one of a fully qualified domain name, a hostname, a certificate signature, an IP address, and a serial number.

In an embodiment, the control entity is an application server hosting a web site.

In an embodiment, the first secret was previously provided by the user and stored in the communication device.

In an embodiment, the final password is sent to the control entity that stores the final password in correspondence with an identifier of the user.

In an embodiment, the final password is sent to the control entity that authenticates the user.

In an embodiment, it is detected that a password is required by the control entity.

The invention also pertains to a communication device for handling passwords for authentication of a user for a service provided by a control entity via the communication device, comprising:
means for retrieving a first secret provided by the user,
means for retrieving a service identifier associated with the service provided by the control entity,
means for retrieving a second secret provided by the user,
means for performing a hash algorithm taking as inputs the second secret and the service identifier, yielding a hashed string,
means for assembling the first secret with the hashed string to obtain a final password.

The invention also pertains to a computer program capable of being implemented within a device, said program comprising instructions which, when the program is executed within said device, carry out steps according to the method according to the invention.

### BRIEF DESCRIPTION OF THE FIGURES

Some embodiments of the present invention are now described, by way of example only, and with reference to the accompanying drawings. The same reference number represents the same element or the same type of element on all drawings.
FIG. 1 is a schematic block diagram of a communication system according to one embodiment of the invention for handling passwords for service authentication.
FIG. 2 is a flow chart illustrating a method for handling passwords for service authentication according to one embodiment of the invention.

The same reference number represents the same element or the same type of element on all drawings.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

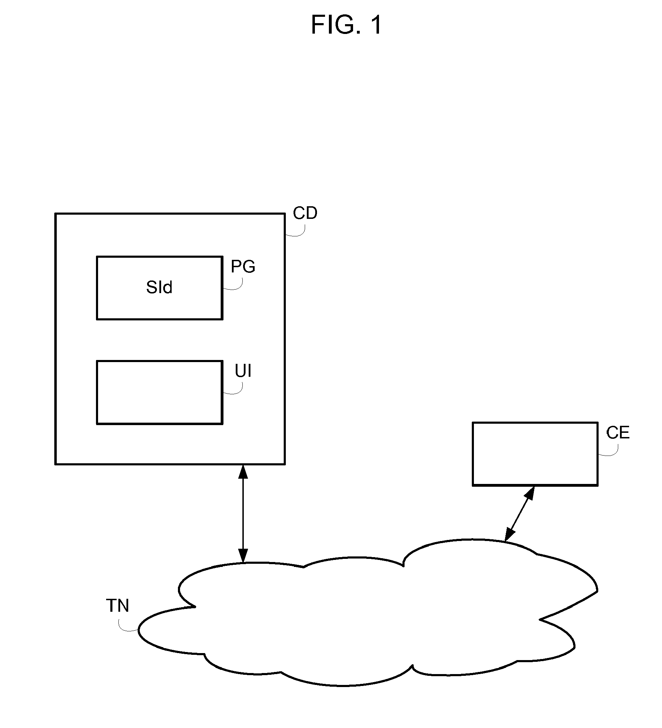

Referring to FIG. 1, a communication system comprises a control entity CE and a communication device CD which are able to communicate between them through at least a telecommunication network TN.

The telecommunication network TN may be a wired or wireless network, or a combination of wired and wireless networks.

The telecommunication network TN can be associated with a packet network, for example, an IP ("Internet Protocol") high-speed network such as the Internet or an intranet, or even a company-specific private network.

The control entity CE is a network entity that is able to communicate with the communication device CD and that offers a service, like a web service, requiring user authentication. The control entity CE manages a database containing user secrets, like hashed passwords, used for authentication and sent by client applications, like web browsers, implemented in communication devices. For example, the control entity hosts a website requiring user authentication to access to the website. In another embodiment, the control entity manages a link to a third-party access control system used as an authentication referential for granting users access to the service-hosted resource.

The communication device CD can be a personal computer or a laptop, an electronic tablet, a smart phone, a phablet, a personal digital assistant, for instance. More generally it concerns any type of electronic equipment comprising a communication module, capable of establishing connection with the telecommunication network to exchange data with other communication equipments.

The communication device CD comprises a user interface UI and a password generator PG.

The interface UI and the password generator PG can be included in a browser plug-in or in a standalone application.

The user interface UI is able to get a first secret, called master secret, and a second secret called service user pin code entered by the user.

For example, the master secret is a secret password defined and only known by the user. The master secret is an alpha-numeric password which is a string of letters and digits or special characters, or a set of characters within a selected encoding system, e.g. ASCII set. It is a strong a unique password.

In another example, the master key is a biometric key collected via a biometric interface of the communication device CD.

For example, the service user pin code is another secret password or a PIN (Personal Identification Number) code, which may be a string of digits for the sake of simplicity.

The password generator PG retrieves a service identifier Sid that can be a fully qualified domain name (FQDN), a hostname, a certificate signature, an IP address, a serial number, or any service identifier configured in PG.

In one embodiment, the password generator PG communicates with an entity in the telecommunication network, such as a dedicated server, that obtains and manages service identifiers Sid associated with web services.

In another embodiment, the password generator PG invites user to choose and enter a service identifier for a web service.

The password generator PG is able to parse a web page received by the browser of the communication device and to detect that a password is required. For example, it is detected a specific URL related to publicly known authentication process. The password generator PG opens a graphical interface via the interface UI to request the user to enter the master secret and the PIN code.

The password generator PG performs a hash algorithm, such as SHA-256, taking as inputs the service user PIN code and the service identifier Sld, resulting in a hashed string.

The password generator PG assembles the master secret with the hashed string to obtain the final form of the password. For example, the password generator PG concatenates the master secret with the hashed string.

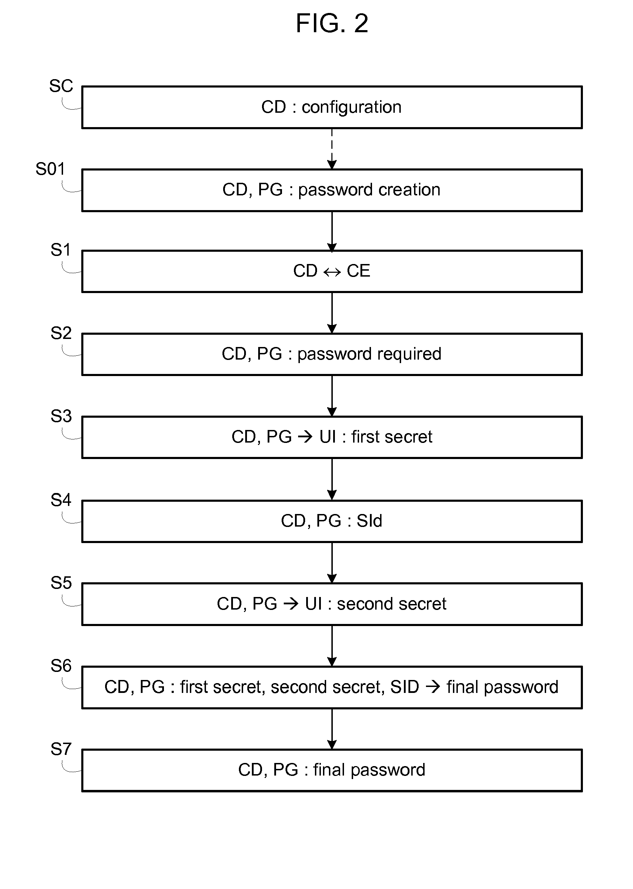

With reference to FIG. 2, a method for handling passwords for service authentication according to one embodiment of the invention comprises steps S1 to S7 executed within the communication system.

In a configuration step SC, the user of the communication device CD can configure the application implemented in the communication device CD.

The password generator PG can invite the user to enter a master secret. Optionally, the password generator PG can store the master secret.

The password generator PG can invite the user to define the type of service identifier Sid to be associated with a service.

The user can choose to define manually the service identifier Sid to be associated with a service, in this case the user will be asked to determine this service identifier each time the user wishes to access the service.

Or the user can choose to define automatically the service identifier Sid to be associated with a service, in this case the user won't be asked to determine this service identifier each time the user wishes to access the service. By default, the service identifier Sld can be a fully qualified domain name (FQDN).

Alternately, the user can choose the service identifier type to be associated with a service (e.g.. FQDN, public certificate signature,). In this case, the password generator PG will always use this type of service identifier to identify a service.

In an initial step S01, the user of the communication device CD connects to the control entity CE providing a service, in order to create an account requiring an identifier of the user and a password for the access to the service.

The password generator PG asks the user to enter a master secret, and retrieves the master secret provided by the user.

Optionally, if the user uses the same communication device that had previously stored the master secret, the password generator PG does not asks user to enter a master secret.

The password generator PG then asks the user to define a service identifier Sid associated with the service provided by the control entity CE.

If the password generator PG is configured with automatic service identifier, the password generator PG retrieves the service identifier set by default.

Also, if the password generator PG has been configured by the user to use a specific type of service identifier, the password generator retrieves the service identified as set by the user

Finally, the password generator PG asks the user to enter a second secret, such as a PIN, and retrieves the second secret provided by the user.

The password generator PG performs a hash algorithm taking as inputs the second secret and the service identifier Sld, yielding a hashed string, and assembles the master secret with the hashed string to obtain a final password.

The password generator PG sends the final password to the control entity that will keep the final password result associated with an identifier of the user, like a login. The account of the user for authentication is assumed to be created, the user can then access to the service by using the identifier of the user and the final password.

The user can then access to the service by means of the final password that can be generated dynamically by the password generator PG of the application implemented in the communication device CD.

In step S1, the user of the communication device CD connects to the control entity CE providing a service.

For example, the control entity CE is an application server hosting a web site. In another example, the control entity CE is a server located within an intranet.

In step S2, the password generator PG detects that a password is required by the control entity CE.

In step S3, the password generator PG triggers the user interface UI to ask user to enter a master secret, and retrieves the master secret provided by the user.

Optionally, if the user uses the same communication device that had previously stored the master secret, the password generator PG does not asks user to enter a master secret and retrieves the master secret previously provided by the user.

In step S4, the password generator PG retrieves a service identifier Sid associated with the service provided by the control entity CE.

Optionally, if the password generator PG is configured with automatic service identifier, the password generator PG retrieves the service identifier set by default or configured by the user at the configuration step.

In step S5, the password generator PG triggers the user interface UI to ask user to enter a second secret, such as a PIN, and retrieves the second secret provided by the user.

In step S6, the password generator PG performs a hash algorithm taking as inputs the second secret and the service identifier Sld, yielding a hashed string, and assembles the master secret with the hashed string to obtain a final password.

In step S7, the password generator PG fills the field of the web page requiring authentication with the final password. Alternatively, the password generator PG triggers the user interface UI to display the final password to the user.

Thus, the final password is used for authentication with the control entity that authenticates the user.

The invention described here relates to a method and a device for handling passwords for service authentication. According to one implementation of the invention, steps of the invention are determined by the instructions of a computer program incorporated into a device, such as the communication device. The program comprises program instructions which, when said program is loaded and executed within the device, carry out the steps of the method.

Consequently, the invention also applies to a computer program, particularly a computer program on or within an information medium, suitable to implement the invention. This program may use any programming language, and be in the form of source code, object code, or intermediate code between source code and object code, such as in a partially compiled form, or in any other form desirable for implementing the method according to the invention.

## Claims

1. A method for handling passwords for authentication of a user for a service provided by a control entity (CE) via a communication device (CD), comprising the following steps in the communication device (CD):
retrieving (S01; S3) a first secret provided by the user,
retrieving (S01; S4) a service identifier (Sld) associated with the service provided by the control entity (CE),
retrieving (S01; S5) a second secret provided by the user,
performing (S01; S6) a hash algorithm taking as inputs the second secret and the service identifier (Sld), yielding a hashed string,
assembling (S01; S6) the first secret with the hashed string to obtain a final password.

2. A method according to claim 1, wherein the communication device (CD) opens a graphical interface to request the user to enter the first secret and the second secret.

3. A method according to claim 1 or 2, wherein the first secret is an alpha-numeric password.

4. A method according to any of claims 1 to 3, wherein the first secret is a biometric key.

5. A method according to any of claims 1 to 4, wherein the second secret is a PIN code.

6. A method according to any of claims 1 to 5, wherein the first secret is concatenated with the hashed string to obtain the final password.

7. A method according to any of claims 1 to 6, wherein the service identifier is one of a fully qualified domain name, a hostname, a certificate signature, an IP address, and a serial number.

8. A method according to any of claims 1 to 7, wherein the control entity (CE) is an application server hosting a web site.

9. A method according to any of claims 1 to 8, wherein the first secret was previously provided by the user and stored in the communication device (CD).

10. A method according to any of claims 1 to 9, wherein the final password is sent to the control entity that stores the final password in correspondence with an identifier of the user.

11. A method according to any of claims 1 to 9, wherein the final password is sent to the control entity that authenticates the user.

12. A method according to any of claims 1 to 11, wherein it is detected (S2) that a password is required by the control entity (CE).

13. A communication device (CD) for handling passwords for authentication of a user for a service provided by a control entity (CE) via the communication device (CD), comprising:
means (PG) for retrieving a first secret provided by the user,
means (PG) for retrieving a service identifier (Sld) associated with the service provided by the control entity (CE),
means (PG) for retrieving a second secret provided by the user,
means (PG) for performing a hash algorithm taking as inputs the second secret and the service identifier (Sld), yielding a hashed string,
means (PG) for assembling the first secret with the hashed string to obtain a final password.

14. A computer program capable of being implemented within a communication device (CD) for handling passwords for authentication of a user for a service provided by a control entity (CE) via a communication device (CD), said program comprising instructions which, when the program is loaded and executed within said communication device (CD), carry out the following steps:
retrieving (S01; S3) a first secret provided by the user,
retrieving (S01; S4) a service identifier (Sld) associated with the service provided by the control entity (CE),
retrieving (S01; S5) a second secret provided by the user,
performing (S01; S6) a hash algorithm taking as inputs the second secret and the service identifier (Sld), yielding a hashed string,
assembling (S01; S6) the first secret with the hashed string to obtain a final password.
